**Europäisches Patentamt**

**European Patent Office**

**Office européen des brevets**

(19)

(11) Veröffentlichungsnummer : **0 174 436**
**B1**

(12)

# EUROPÄISCHE PATENTSCHRIFT

(45) Veröffentlichungstag der Patentschrift :
28.06.89

(21) Anmeldenummer : 85105929.5

(22) Anmeldetag : 14.05.85

(51) Int. Cl.⁴ : **G 05 D   1/03, H 02 P   7/68**

(54) Antriebs- und Lenksteuersystem für fahrerlose Transporteinheiten.

(30) Priorität : 10.08.84 CH 3847/84

(43) Veröffentlichungstag der Anmeldung :
19.03.86 Patentblatt 86/12

(45) Bekanntmachung des Hinweises auf die Patenterteilung : 28.06.89 Patentblatt 89/26

(84) Benannte Vertragsstaaten :
AT BE DE FR GB IT NL SE

(56) Entgegenhaltungen :
DE--A-- 2 555 365
FR--A-- 2 165 335
FR--A-- 2 353 426

(73) Patentinhaber : **JD-Technologie AG**
**c/o Gestinor Services AG Chamerstrasse 50**
**CH-6300 Zug (CH)**

(72) Erfinder : **Bögli, Peter, Dipl. El. Ing. ETH**
**Mattenweg 15**
**CH-2557 Studen (CH)**
Erfinder : **Buser, Jörg**
**Juravorstadt 27**
**CH-2502 Biel (CH)**

(74) Vertreter : **Blum, Rudolf Emil Ernst et al**
**c/o E. Blum & Co Patentanwälte Vorderberg 11**
**CH-8044 Zürich (CH)**

Jouve, 18, rue St-Denis, 75001 Paris, France

EP 0 174 436 B1

**Beschreibung**

Die vorliegende Erfindung betrifft ein Antriebs- und Lenksteuersystem für fahrerlose Transporteinheiten mit je zwei Antriebsrädern sowie zusätzlich freilaufenden Stützrädern wobei beide Antriebsräder mit vertikalen Lenkachsen um die Lenkwinkel $\alpha$, $\beta$ verschwenkbar sind und ein vorbestimmtes Antriebsrad hinsichtlich seiner Antriebsgeschwindigkeit frei steuerbar ist.

Solche Antriebs- und Lenksteuersysteme sind allgemein anwendbar, wenn es um den Antrieb und die Lenkung fahrbarer Objekte geht, wie z. B. bei der geführten oder gesteuerten Fahrt von gleisfreien Fahrzeugen in automatischen Flurförderanlagen.

Es sind Antriebs- und Lenksteuersysteme für fahrerlose Transporteinheiten bekannt, bei denen individuell angetriebene Antriebsräder um eine vertikale Achse verschwenkbar angeordnet sind. So ist z. B. von der Anmelderin in der DE-AS Nr. 2 555 365 ein Lenksteuersystem für ferngesteuerte Transporteinheiten beschrieben, welche je zwei Antriebsräder $R_A$, $R_B$ und gegebenenfalls zusätzliche freilaufende Stützräder aufweisen. $R_A$ und $R_B$ werden mit den Antriebsgeschwindigkeiten $V_A$ bzw. $V_B$ angetrieben und durch je eine ihre Lenkwinkel $\alpha$ bzw. $\beta$ bestimmende Leitlinie gelenkt, wobei $\alpha$ und $\beta$ die Winkel zwischen den jeweiligen Laufrichtungen der Antriebsräder $R_A$, $R_B$ und der Verbindungslinie durch deren Lenkachsen bedeuten. Hiezu ist jedem Antriebsrad eine mit diesem beliebig verschwenkbare Antenne zugeordnet, die ein elektrisches Leitkabel abtastet und dadurch über einen Lenkmotor das zugeordnete Antriebsrad so verschwenkt, dass sie sich stets über der Leitspur befindet und das Antriebsrad der Leitspur entlang führt. Die Antriebsgeschwindigkeit $V_A$ eines vorbestimmten Antriebsrades $R_A$ ist dann von einer übergeordneten Steuereinheit, über Leitkabel und Antenne, frei steuerbar, während die Antriebsgeschwindigkeit $V_B$ des anderen Antriebsrades $R_B$ entsprechend der Beziehung

$$V_B = (\cos \alpha / \cos \beta) \cdot V_A \qquad (I)$$

gesteuert wird.

Erste wesentliche Nachteile eines derart gestalteten Antriebes ergeben sich aus dem Umstande, dass bei Transporteinheiten der vorgenannten Art der wirtschaftlich vertretbare Aufwand für die Antriebs- und Lenksteuerung begrenzt ist, und deshalb in der Regel die Antriebsgeschwindigkeiten nicht mit der erforderlichen Genauigkeit im Verhältnis der zugeordneten Lenkwinkel aufeinander abgestimmt werden können. Zur Erfüllung der ein Naturgesetz darstellenden Beziehung I stellen sich deshalb zwangsweise elektrische und mechanische Ausgleichsmechanismen ein, welche — insbesondere bei hohen Geschwindigkeiten und extremen Fahrpositionen — Betrieb und Unterhalt solcher Transporteinheiten nachteilig beeinflussen. Im vorliegenden Falle arbeiten die beiden Radantriebe nämlich als Teile von unabhängigen Geschwindigkeitsreglern. Bei Differenzen in den auf die Fahrzeuglängsachse projizierten Geschwindigkeiten wird das Gesamtantriebsdrehmoment — entsprechend der Elastizität der einzelnen Regelcharakteristiken — ungleichmässig auf die beiden Radantriebe aufgeteilt. Dies kann im Extremfall dazu führen, dass sich die beiden Radantriebe entgegenwirken, d. h. dass die entsprechende Transporteinheit nur von einem Motor angetrieben wird, während der andere Motor als Generator arbeitet und bremst. Offensichtlich ergibt sich daraus ein unnötig erhöhter Stromverbrauch, der wegen der batteriegespeisten Stromversorgung als besonders nachteilig empfunden wird. Auch führen die unterschiedlichen Drehmomente zu zusätzlichen Strukturbelastungen und ungleichen Abnützungen in Antriebsmotoren, Getrieben und Radbandagen. Dadurch wird die Spurführgenauigkeit verschlechtert und die Manövrierfähigkeit beeinträchtigt, insbesondere bei gesteuerter Fahrt, z. B. mit Hilfe einer gespeicherten Tabelle. Als Folge zeigen solche Transporteinheiten Erschwernisse beim Betrieb und einen merklich verteuerten Unterhalt. Weitere wesentliche Nachteile ergeben sich aus dem Umstande, dass bei dem vorgeschlagenen Transportsystem die maximal zulässigen Lenkwinkel $\alpha$, $\beta$ zwischen den Laufrichtungen der Antriebsräder und der Verbindungslinie durch deren vertikale Lenkachsen $< \pm 90°$ sein müssen. Der mechanisch zur Verfügung stehende Schwenkbereich der Antriebsräder, der sich von -90° bis +90° erstreckt, kann also aus steuerungstechnischen Gründen nicht voll genutzt werden. Besonders nachteilig ist dabei, dass die Lenkwinkel $\alpha$, $\beta = \pm 90°$ nicht zur Verfügung stehen, und deshalb auf interessante Fahrtypen, wie z. B. « Drehen an Ort », verzichtet werden muss. Dadurch ist die Beweglichkeit und Manövrierfähigkeit eingeschränkt und zusätzlich auch keine freizügige Auslegung der Leitspuren möglich.

Die Erfindung, wie sie in den Ansprüchen gekennzeichnet ist, löst die Aufgabe, ein einfaches und betriebssicheres Antriebs- und Lenksteuersystem für fahrerlose Transporteinheiten zu schaffen, bei dem mindestens zwei im Bereich von - 90° bis + 90° um die Lenkwinkel $\alpha$, $\beta$ verschwenkbare Antriebsräder $R_A$ bzw. $R_B$ individuell gelenkt und angetrieben werden, ohne zur Steuerung ihrer Antriebsgeschwindigkeiten $V_A$ bzw. $V_B$ die Beziehung $V_B = (\cos \alpha / \cos \beta) \cdot V_A$ zu benützen. Die Neuerung bezweckt ferner, eine Antriebs- und Lenksteuerung für Transporteinheiten anzugeben, welche sich über den vollen Schwenkbereich der Antriebsräder von + 90° bis + 90° anwenden lässt und zum Betrieb in den Extremlagen $\alpha$, $\beta = 0°$ ; $- 90°$ ; $+ 90°$ ; $\pm 90°$ optimiert ist. Auch soll das antragsgemässe Antriebs -und Lenksteuersystem tolerant sein gegen mechanische und elektrische Unsymmetrien zwischen den einzelnen Radantrieben und sowohl bei geführter wie bei gesteuerter Fahrt eine genaue Spurführung gewährleisten.

Diese Aufgabe wird erfindungsgemäss mit den Mitteln gelöst, wie sie in der Fassung des unabhängigen Anspruches gekennzeichnet sind. Vorteilhafte Weiterbildungen sind in den abhängigen Ansprüchen angegeben. Durch diese Mittel ist nicht nur die der Erfindung zugrunde liegende Aufgabe vorteilhaft gelöst, sondern es wird darüber hinaus ein Antriebssystem für gleislose Transporteinheiten geschaffen, das folgende Vorteile bietet :

Da zur Abstimmung der Antriebsgeschwindigkeiten $V_A$, $V_B$ im Verhältnis ihrer Auslenkwinkel $\alpha$ bzw. $\beta$ die Beziehung $V_B = (\cos \alpha/\cos \beta) \cdot V_A$ nicht mehr gerechnet werden muss, entfällt der dafür erforderliche Hardware- und Softwareaufwand. Dies vereinfacht den Aufbau der erfindungsgemässen Antriebssteuerung und verbilligt merklich deren Herstellung und Unterhalt. Mit dem Wegfall dieses Rechnungsganges entfallen aber auch die sich bei ungenügender Rechengenauigkeit einstellenden Geschwindigkeitsabweichungen mit ihren negativen Auswirkungen, wie erhöhter Stromverbrauch, ungenaue Spurführung und zusätzliche Strukturbelastung. Weitere Vorteile ergeben sich aus dem Umstande, dass mit dem erfindungsgemässen Antriebssystem die Antriebsräder über ihren vollen Schwenkbereich von - 90° bis + 90° verfahrbar sind und dass in den Extremlagen $\alpha$, $\beta = 0°$, - 90°, + 90° der Radantrieb optimal ist. Dies ermöglicht die Anwendung von neuartigen Fahrtypen und Bewegungsabläufen, was die Manövrierbarkeit und Beweglichkeit derart angetriebener Transporteinheiten grundsätzlich verbessert. Auch ergibt sich daraus eine grössere Freizügigkeit bei der Festlegung von Fahrspuren, die so besser an räumliche und betriebliche Verhältnisse angepasst werden können. Als besonders vorteilhaft hat sich auch erwiesen, dass in der Konfiguration MASTER/SLAVE die durch die Beziehung I gegebene geschwindigkeitsmässige Abstimmung des Slave-Rades auf das Master-Rad selbsttätig durch den Bewegungsablauf erfolgt und hiezu keine speziellen Vorrichtungen und Massnahmen erforderlich sind. Da dieser selbsttätige Geschwindigkeitsabgleich unmittelbar durch den Bodenkontakt der beiden Antriebsräder erfolgt, wird er auch fortlaufend an ändernde Betriebsbedingungen, wie ungleiche Abnützung der Radbandagen, angepasst. Dies bedeutet eine wesentliche Verbesserung der Betriebssicherheit derart angetriebener Transporteinheiten. Im weitern ist die Konfiguration MASTER/SLAVE dadurch charakterisiert, dass die auf gleich grosse Ankerströme geregelten Antriebsservos hinsichtlich ihrer Geschwindigkeiten sehr weich und elastisch gekoppelt sind. Zum selbsttätigen Geschwindigkeitsabgleich der beiden Antriebsräder sind deshalb nur geringe Kräfte erforderlich, die auch bei grossen Auslenkwinkeln $\alpha$, $\beta$ durch die Haftreibung zwischen Radbandagen und Boden sicher übertragen werden. Schlupf und Strukturbelastungen werden deshalb durch den selbsttätigen Geschwindigkeitsabgleich nur unwesentlich erhöht und damit die an sich gute Spurführung nicht beeinträchtigt. Anderseits ist die Kombination unempfindlich gegen Unterschiede in den Radantrieben, z. B. ungleiche Motordrehmomente, Getriebewiderstände oder Raddurchmesser. Die Kombination MASTER/SLAVE ist demnach in der Lage, drehmoment-unsymmetrische Radantriebe zu tolerieren und sich abnützungsbedingten Veränderungen der Antriebsgeschwindigkeiten selbsttätig anzupassen. Es ist offensichtlich, dass dies Herstellung und Unterhalt derart ausgerüsteter Transporteinheiten wesentlich erleichtert und verbilligt.

Die Erfindung wird nachstehend in ihrer Anwendung beim automatischen Betrieb einer Flurförderanlage beschrieben, doch ist das hier gezeigte Prinzip allgemein anwendbar bei Transporteinheiten in der Lager- und Fördertechnik sowie zum automatischen Verschieben von aus Elementen zusammenbaubaren Baueinheiten. In der lediglich dieses Anwendungsbeispiel der Erfindung darstellenden Zeichnung zeigen :

Fig. 1 schematisch und im Grundriss Disposition und Radanordnung einer Transporteinheit,

Fig. 2 ein schematisches Blockschaltbild des prinzipiellen Aufbaues des Antriebsservos,

Fig. 3 ein schematisches Blockschaltbild des erfindungsgemässen Antriebes in der Konfiguration MASTER/SLAVE,

Fig. 4a eine Darstellung der Verhältnisse beim Durchfahren einer Kurve in der Konfiguration MASTER/SLAVE,

Fig. 4b ein Diagramm für die wegabhängigen Verläufe der Lenkwinkel $\alpha$, $\beta$ und der Antriebsgeschwindigkeiten $V_A$, $V_B$ beim Durchfahren einer Kurve gemäss Fig. 4a,

Fig. 5 ein schematisches Blockschaltbild des erfindungsgemässen Antriebes in der Konfiguration MASTER/MASTER,

Fig. 6 eine mögliche Spurführung mit charakteristischen Fahrtypen für die Konfigurationen MASTER/SLAVE und MASTER/MASTER.

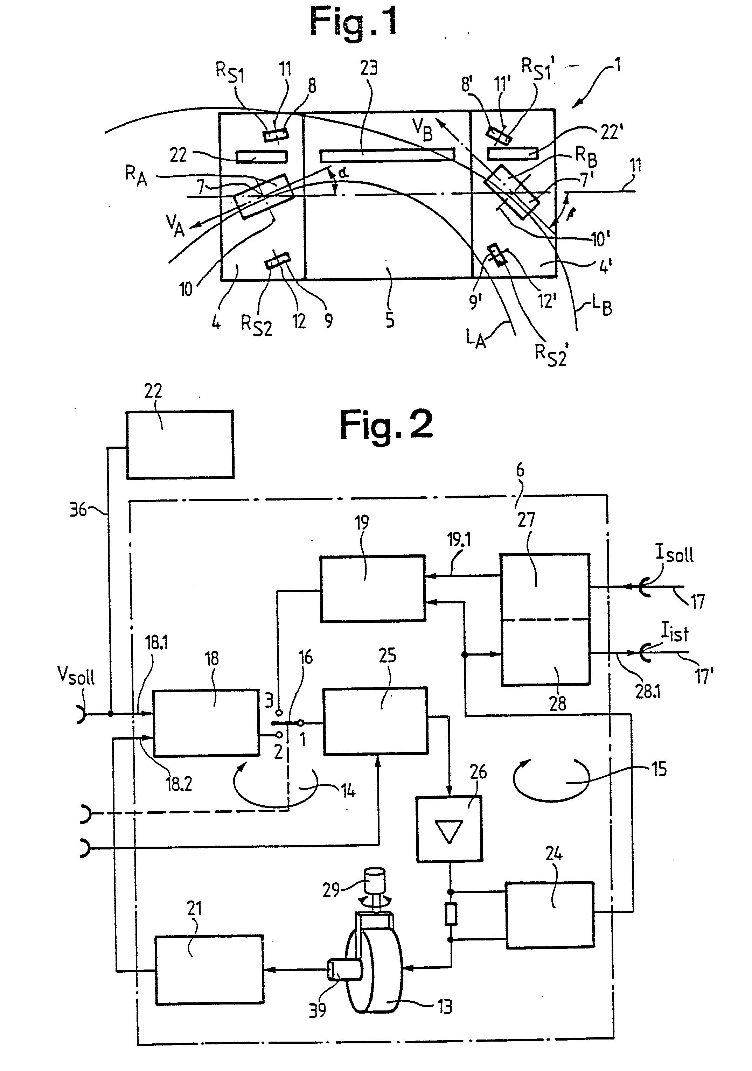

Figur 1 zeigt eine mögliche Ausführungsform einer fahrerlosen Transporteinheit 1, wie sie zum Antrieb durch die erfindungsgemässe Antriebs- und Lenksteuerung vorgesehen ist, bestehend aus zwei separaten vollständigen Fahrzellen 4, 4', die spiegelsymmetrisch mit einem lastaufnehmenden Verbindungsteil, dem Stützkörper 5, verbunden sind. Jede Fahrzelle 4, 4' enthält im wesentlichen : ein lenkbares Antriebsrad $R_A$ bzw. $R_B$ mit Fahr- und Lenkservo, zwei nachlaufende Stützräder $R_{S1}$, $R_{S2}$ bzw. $R_{S1}'$, $R_{S2}'$, einen Fahrzellen-Mikrocomputer 22 bzw. 22' zur Steuerung und Ueberwachung von Fahrgeschwindigkeit, Lenkwinkel und Sicherheitsvorrichtungen usw., sowie in dieser Figur nicht dargestellte Sicherheitsvorrichtungen. Alle drei Räder sind jeweils um eine vertikal verlaufende Lenkachse 7, 8, 9 bzw. 7', 8', 9' verschwenkbar an der Unterseite der Transporteinheit 1, horizontalachsig in zugeordneten Radlagern bzw. Aufhängungen drehbar gelagert. Von den im gegenseitigen Abstand angeordneten Lenkachsen 7, 8, 9 bzw. 7', 8', 9' verlaufen die Lenkachsen 7 bzw. 7' durch die Drehachsen 10 bzw. 10' der zugeordneten Antriebsräder $R_A$ bzw. $R_B$, während die Stützräder $R_{S1}$, $R_{S2}$ bzw. $R_{S1}'$, $R_{S2}'$ selbstlenkend mit abständlich von den Drehachsen 11, 12 bzw. 11', 12' verlaufenden Lenkachsen 8, 9 bzw. 8', 9' ausgebildet sind. Die Antriebsräder $R_A$, $R_B$ sind mittels der erfindungsgemässen Antriebs- und Lenksteuerung um die zugeordneten Lenkachsen 7 bzw. 7' motorisch verschwenkbar, und sie werden in später noch näher zu erläuternder Weise angetrieben. Obwohl in Fig. 1 beide Antriebsräder $R_A$, $R_B$ auf der Wagenlängsmittelachse 11 angeordnet sind, ist hinsichtlich der Antriebssteuerung auch eine diagonale oder beliebig andere Anordnung gleichermassen möglich. $\alpha$ und $\beta$ bezeichnen die Lenkwinkel zwischen der jeweiligen Laufrichtung des einen bzw. anderen Antriebsrades $R_A$, $R_B$ und der gemeinsamen Wagenlängsmittelachse 11 oder, falls die Antriebsräder nicht auf der Wagenlängsmittelachse angeordnet sind, der Verbindungsgeraden durch ihre Drehzentren. Der Stützkörper 5 enthält seinerseits einen Stützkörper-Mikrocomputer 23 für übergeordnete Steuerung und Ueberwachung, sowie, hier nicht dargestellt, Lastaufnahmemittel und eine batteriegestützte Energieversorgung.

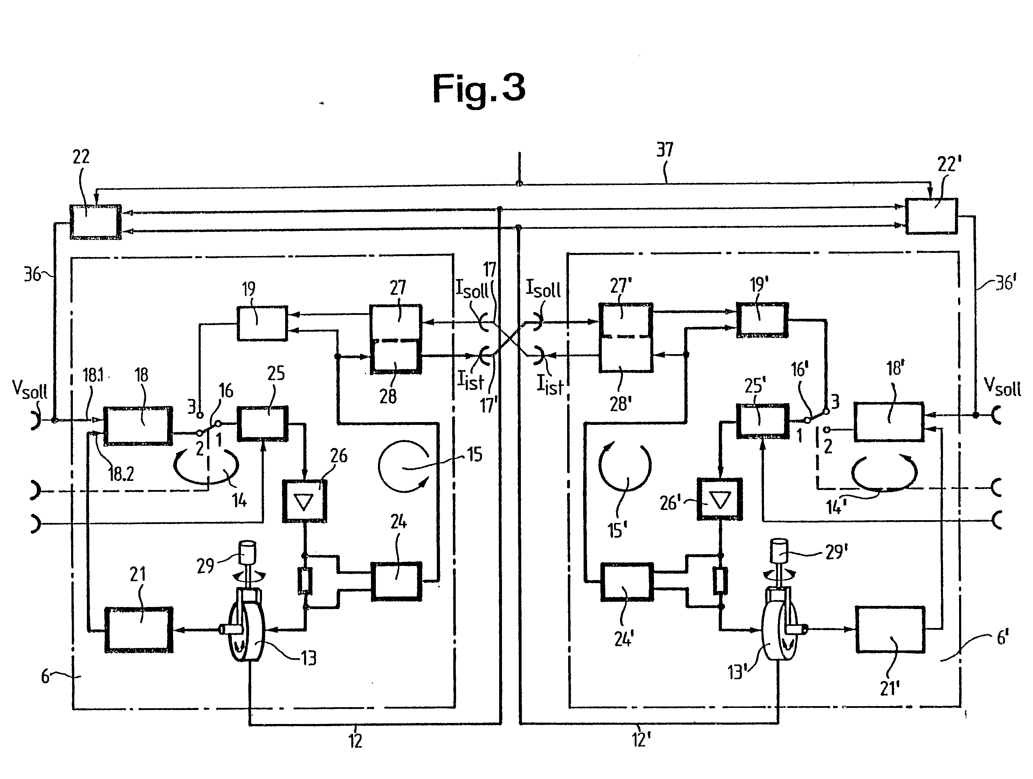

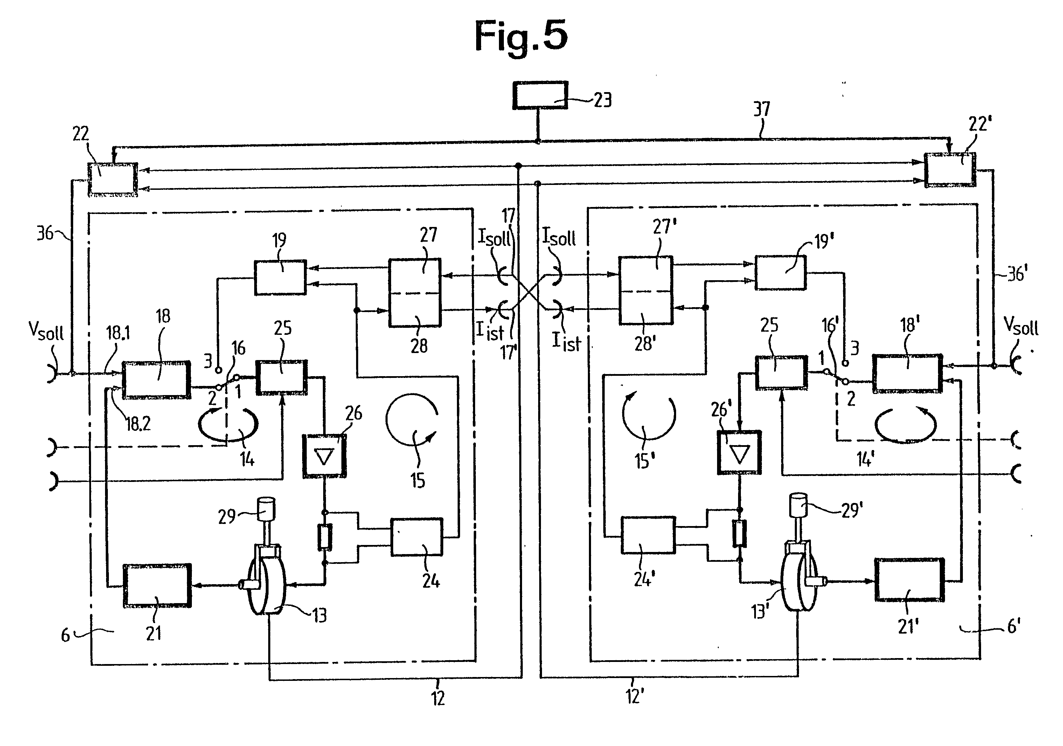

Zum Antrieb der Antriebsräder $R_A$, $R_B$ ist je ein Antriebsservo 6 gemäss Fig. 2 vorgesehen, der im vorliegenden Beispiel in digitaler Technik ausgeführt ist und der im wesentlichen aus einem Geschwindigkeitsregelkreis 14 und einem Ankerstromregelkreis 15 besteht, welche über die Umschaltvorrichtung 16 für die Betriebsarten und Konfigurationen wahlweise motortreibend auf den permanentmagneterregten Elektromotor 13 schaltbar sind. Der getastete Leistungsverstärker 26, der ihn ansteuernde Pulsbreitenmodulator 25 sowie die Umschaltvorrichtung 16 sind in Reihe geschaltet und sowohl dem Geschwindigkeitsregelkreis 14 wie dem Ankerstromregelkreis 15 gemeinsam. Der Geschwindigkeitsregelkreis 14 ist über einen Pulsraten-Digitalwandler 21 sowie einen digitalen, d. h. zeit- und amplitudenquantisierten Geschwindigkeitsregler 18 (PID-Regler) geschlossen, dessen Geschwindigkeitsvorgabeeingang 18.1 mit dem zugehörigen Fahrzellen-Mikrocomputer 22 verbunden ist. Andererseits schliesst sich der Ankerstromregelkreis 15 über eine Ankerstromaufbereitungsschaltung 24 und einen Stromregler 19 (PI-Regler), dessen Stromvorgabeeingang 19.1 über den Leitungsempfänger 27 und eine (z. B. serielle) Datenleitung 17 mit dem anderen Antriebsservo 6' in Verbindung steht. Der Leitungstreiber 28 ist der Ankerstromaufbereitungsschaltung 24 nachgeschaltet und mit seinem Ausgang 28.1 über die Datenleitung 17' an den Leitungsempfänger 27' des anderen Antriebsservos 6' gekoppelt. Die Umschaltvorrichtung 16 für die Betriebsarten und Konfigurationen weist die Stellungen MASTER und SLAVE auf und kann als mechanischer Schalter, oder als elektronische oder software Schaltvorrichtung ausgebildet sein. Zum Antrieb einer Transporteinheit werden die beiden Antriebsservos 6, 6' elektrisch zusammengeschaltet und zwar, wie im folgenden erläutert, in der Konfiguration MASTER/SLAVE gemäss Fig. 3 oder in der Konfiguration MASTER/MASTER gemäss Fig. 5.

In Fig. 3 ist im Antriebsservo 6 der Geschwindigkeitsregelkreis 14 über die Umschaltvorrichtung 16 geschlossen und der Geschwindigkeitsregler 19 zur Geschwindigkeitsvorgabe an den Fahrzellen-Mikrocomputer 22 angeschlossen.

Andererseits ist im Antriebsservo 6' der Ankerstromregelkreis 15' über den Umschalter 16' geschlossen und der Stromregler 19' zur Stromvorgabe über die Verbindungsleitung 17 an den Leitungstreiber 28 des Antriebsservos 6 angeschlossen. Da der Geschwindigkeitsregelkreis 14 seine vorgegebene Geschwindigkeit unabhängig einhält und der abhängige Ankerstromregelkreis 15' seine Geschwindigkeit entsprechend den Lenkwinkeln $\alpha$, $\beta$ anpasst, gilt der Antriebsservo 6 als MASTER, der Antriebsservo 6' als SLAVE und deren Zusammenschaltung als Konfiguration MASTER/SLAVE.

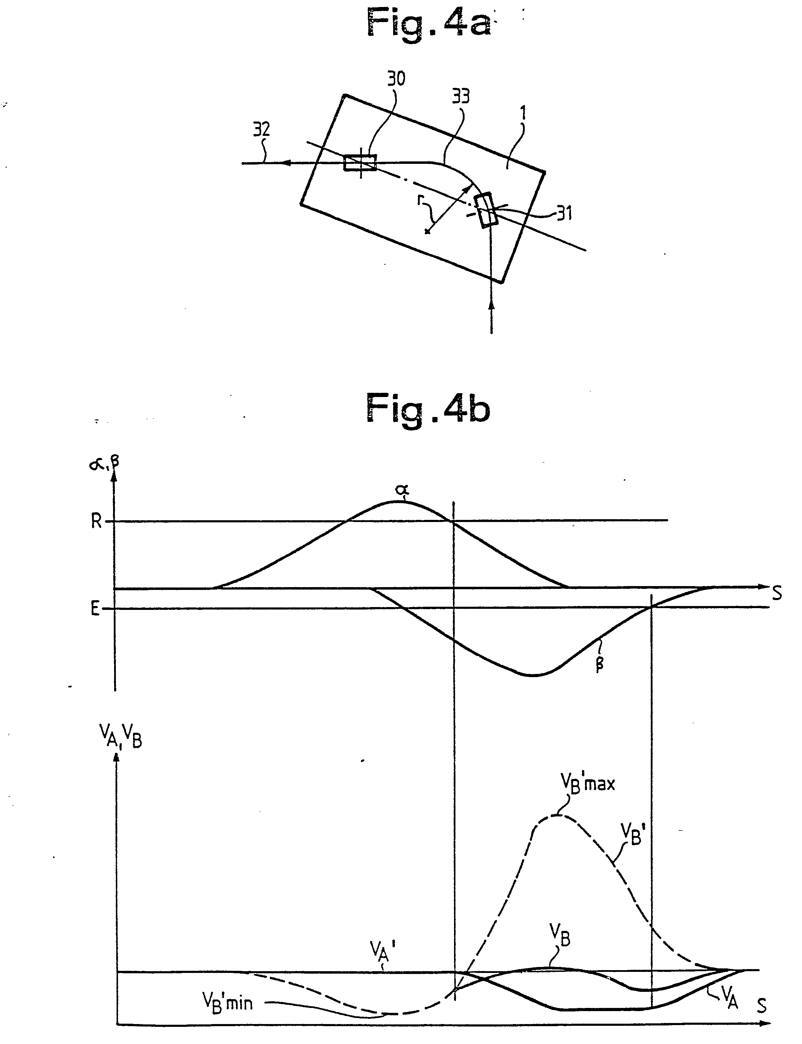

Fig. 4a zeigt eine Transporteinheit 1 am Ausgang einer Kurve, wobei das vorlaufende Master-Rad 30 die Geradefahrstrecke 32 erreicht hat, während das nachlaufende Slave-Rad 31 sich noch auf der Kurvenstrecke 33 befindet. Beim Durchfahren einer derartigen Kurve ergeben sich für die Lenkwinkel $\alpha$, $\beta$ sowie für die Antriebsgeschwindigkeiten $V_A$, $V_B$ die in Fig. 4b als Funktion des Weges S dargestellten grundsätzlichen Verläufe. Dabei ist mit $V_B'$ der Geschwindigkeitsverlauf des Slave-Antriebes dargestellt, wenn die Antriebsgeschwindigkeit des Master-Antriebes gemäss $V_A'$ konstant gehalten wird. Die Extremalwerte des $V_B'$-Verlaufes verhalten sich wie folgt :

$$\frac{V_B' \, max}{V_A'} = \frac{V_A'}{V_B' \, min} = k \tag{II}$$

Der Überhöhungsfaktor « k » ist eine Funktion der Kurvenform bis und mit einer Radstandlänge vor und nach der Kurve, sowie des Kurvenradius und des Radstandes des Fahrzeuges. Für einfache 90°-Kurven mit geraden Zu- und Wegfahrstrecken gilt näherungsweise :

$$k \cong \frac{1}{r} \tag{III}$$

wobei l den Fahrzeug-Radstand und r den Kurvenradius bedeuten.

Mit $V_B$ ist der Geschwindigkeitsverlauf des Slave-Antriebes bezeichnet, wie er sich ergibt, wenn die Geschwindigkeit des Master-Antriebes den erfindungsgemässen, in der Funktionsbeschreibung näher erläuterten Verlauf $V_A$ aufweist.

In Fig. 5 sind in beiden Antriebsservos 6, 6' die Geschwindigkeitsregelkreise 14 bzw. 14' über die entsprechenden Umschaltvorrichtungen 16 bzw. 16' geschlossen und so motortreibend auf die zugehörigen Elektromotore 13 bzw. 13' geschaltet. Die Datenleitungen 36, 36' verbinden die beiden Geschwindigkeitsregler 18, 18' mit den zugehörigen Fahrzellen-Mikrocomputern 22, 22', welche über die gemeinsame Synchronisationsleitung 37 vom Stützkörper-Mikrocomputer 23 die gleiche Geschwindigkeitsvorgabe erhalten. Da die beiden Geschwindigkeitsregelkreise 14, 14' die gleichen Antriebsgeschwindigkeiten $V_A$, $V_B$ unabhängig voneinander einhalten, gilt jeder der beiden Antriebsservos 6, 6' als MASTER, und deren Zusammenschaltung über die gemeinsame Synchronisationsleitung 37 als Konfiguration MASTER/MASTER.

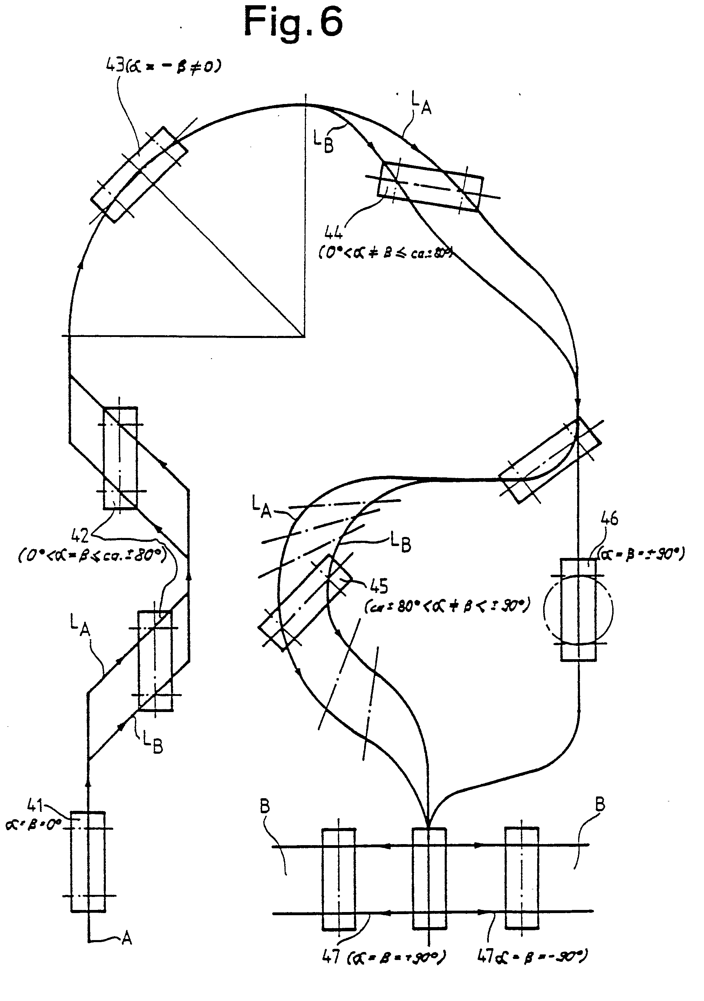

Die erfindungsgemässe Antriebs- und Lenksteuerung ermöglicht neuartige Fahrtypen, von denen sieben besonders charakteristische in Fig. 6 dargestellt sind und die einzeln oder in Kombination eine Vielzahl von Bewegungsabläufen und Manövern ermöglichen. Wie später in der Funktionsbeschreibung ausführlich erläutert, ist es aufgrund der verwendeten Antriebsservos zweckmässig, die Fahrtypen nach der Grösse der beiden Lenkwinkel $\alpha$, $\beta$ zu unterscheiden : Eine erste Gruppe von Fahrtypen umfasst den Winkelbereich $0 \leqslant \alpha$, $\beta \leqslant$ ca. $\pm 80^\circ$. Dazu gehören :
— « Geradeausfahrt entlang der Wagenlängsachse 11 » ($\alpha = \beta = 0^\circ$)
— « Geradeausfahrt schräg zur Wagenlängsachse 11 » ($0^\circ < \alpha = \beta \leqslant$ ca. $\pm 80^\circ$)
— « Kreisfahrt mit beliebigem Radius, Kreismittelpunkt auf der Symmetrieachse » ($\alpha = - \beta \neq 0 \leqslant$ ca. $\pm 80^\circ$)
— « Kurvenfahrt mit beliebigem Krümmungsradius und Krümmungsmittelpunkt » ($0^\circ < \alpha \neq \beta \leqslant$ ca. $\pm 80^\circ$).

Eine zweite Gruppe von Fahrtypen umfasst den Winkelbereich ca. $\pm 80^\circ < \alpha$, $\beta \leqslant \pm 90^\circ$. Dazu gehören :
— « Kurvenfahrt mit beliebigem Krümmungsradius und Krümmungsmittelpunkt » (ca. $\pm 80^\circ < \alpha \neq \beta < \pm 90^\circ$)
— « Drehen an Ort » ($\alpha = - \beta = \pm 90^\circ$)
— « Geradeausfahrt quer zur Wagenlängsachse 11 » ($\alpha = \beta = \pm 90^\circ$).

Zur Erläuterung der Funktionsweise der erfindungsgemässen Antriebssteuerung sei auf die Figuren 1 bis 6 hingewiesen, und dabei angenommen, dass in einer automatischen Flurförderanlage eine Vielzahl von Transporteinheiten — z. B. zum Zusammenstellen von aus Bauelementen bestehenden Baueinheiten — auf einem Wegnetz zwischen Stationen verfahrbar sei. Für die Lenkung der in Fig. 1 dargestellten Transporteinheit 1 werden die lenkbaren Antriebsräder $R_A$, $R_B$ in bekannter Weise von je einem Lenkmotor um ihre vertikalen Lenkachsen (7 bzw. 7') ausgeschwenkt. Die hierfür erforderliche laufende Vorgabe der Lenkwinkel $\alpha$, $\beta$ erfolgt nach mindestens 2 verschiedenen Verfahren : In der geführten Fahrt folgt jedes Antriebsrad $R_A$, $R_B$ mittels einer Abtasteinrichtung je einer vorgegebenen Leitlinie $L_A$, $L_B$ am Boden, die auch für beide Antriebsräder $R_A$, $R_B$ identisch sein können. Die Lenkwinkel $\alpha$, $\beta$ sind damit nicht unter Kontrolle der Transporteinheiten 1, sondern der Leitlinien $L_A$, $L_B$. In der gesteuerten Fahrt sind die beiden Lenkwinkel $\alpha$ und $\beta$ eine Funktion der von einem Referenzpunkt gemessenen zurückgelegten Wegstrecke. Diese Funktion, welche auch Fahrgeschwindigkeitsinformation enthält, wird als Tabelle im jeweiligen Fahrzellen-Mikrocomputer 22, 22' gespeichert. Die vom Fahrzeug beschriebene Fahrkurve ist also das direkte und ausschliessliche Resultat dieser Tabelle.

Für den Antrieb der Antriebsräder $R_A$, $R_B$ sind die beiden Antriebsservo 6, 6' vorgesehen. Da dieselben identisch aufgebaut sind, soll ihre Funktion im folgenden anhand des Antriebsservos 6 gemäss Fig. 2 erläutert werden. Weil der permanentmagneterregte Elektromotor 13 ab Batterie gespeist wird, und somit Wirkungsgradüberlegungen höchste Priorität haben, ist die Verwendung eines getasteten Leistungsverstärkers 26 naheliegend. Sein Verhalten ist binär, d. h. er ist entweder vollkommen durchgeschaltet oder vollkommen gesperrt und er wird in diesem Sinne vom Pulsbreitenmodulator 25 angesteuert und analogisiert. Die Geschwindigkeitserfassung erfolgt über einen Inkrementalencoder 39, dessen Ausgangsimpulse während einer variablen Messperiode aufkumuliert und in eine interne Floating-Point-Darstellung umgewandelt werden. Es stehen die Betriebsarten MASTER, SLAVE und STAND-BY (Ruhezustand) zur Verfügung, wobei die beiden ersteren über die Umschaltvorrichtung 16 und der letztere über den Pulsbreitenmodulator 25 wählbar sind. In der Betriebsart « MASTER » ist der Geschwindigkeitsregelkreis 14 treibend auf den DC-Motor 13 geschaltet, während der Ankerstromregelkreis 15 nicht aktiviert ist. Hiezu wird der Geschwindigkeitsregelkreis 14 über die Kontakte 1-2 des Betriebsartenwahlschalters 16 geschlossen und die Geschwindigkeitsvorgabe $V_A$ z. B. in paralleler Form vom zugehörigen Fahrzellen-Mikrocomputer 22 an den Eingang 18.1 des digitalen d. h. zeit- und amplitudenquantisierten Geschwindigkeitsreglers 18 gegeben. Im weiteren wird der Ankerstrom des derart angetriebenen DC-Motors 13 in der Ankerstromaufbereitungsschaltung 24 gemessen, in digitale Form gebracht und nach entsprechender Formatwandlung als serielles Telegramm dem entsprechenden Slaveservo 6' als Führgrösse übermittelt. In der Betriebsart SLAVE ist der Ankerstromregelkreis 15 treibend auf den DC-Motor 13 geschaltet, während der Geschwindigkeitsregelkreis 14 nicht aktiviert ist. Hiezu wird der Ankerstromregelkreis 15 über die Kontakte 1-3 der Umschaltvorrichtung 16 geschlossen und die Stromvorgabe $I_{Soll}$ in serieller Form vom zugehörigen Masterservo 6' als Führgrösse an den Eingang 19.1 des Stromreglers 19 gegeben. In der Betriebsart STAND-BY wird der Pulsbreitenmodulator 25 abgeschaltet, dadurch der getastete Leistungsverstärker 26 gesperrt und so ein Ankerstrom im DC-Motor 13 verunmöglicht.

Fig. 3 zeigt eine Ausbildung der erfindungsgemässen Antriebssteuerung, wie sie in der Konfiguration MASTER/SLAVE vorzugsweise für kleine bis mittlere Auslenkwinkel $\alpha$, $\beta \leqslant =$ ca. $\pm 80^\circ$ vorgesehen ist. Der in Fahrtrichtung vorne liegende Antriebsservo 6 wird in der Betriebsart MASTER als Geschwindigkeitsregelkreis 14 starr geführt und sein Ankerstrom über die Ankerstromaufbereitungsschaltung 24 und die Datenleitung 17′ dem in Fahrtrichtung hinten liegenden, in der Betriebsart SLAVE als Ankerstromregelkreis 15′ betriebenen Antriebsservo 6′ als Führgrösse vorgegeben. Dessen Drehgeschwindigkeit und damit $V_B$ stellt sich so ein, dass beide DC-Motoren 13, 13′ denselben Strom aufnehmen. Dies bedeutet, dass sich die beiden DC-Motoren 13, 13′ je hälftig in das aufzubringende Vortriebsmoment teilen, womit Stromverbrauch und Verschleiss automatisch minimiert sind. Dem Antriebsservo 6′ ist also durch den Antriebsservo 6 nicht nur der Ankerstrom vorgegeben, sondern auch die Geschwindigkeit $V_B$, da dieselbe über den Bodenkontakt der beiden Antriebsräder $R_A$, $R_B$ entsprechend den Lenkwinkeln $\alpha$, $\beta$ laufend an $V_A$ angepasst wird. Deshalb die Bezeichnung MASTER für den Antriebsservo 6 und SLAVE für den Antriebsservo 6′.

In der Konfiguration MASTER/SLAVE erfolgt der durch die Beziehung $V_B = (\cos\ \alpha / \cos\ \beta) \cdot V_A$ gegebene Geschwindigkeitsabgleich der beiden Antriebsservos 6, 6′ durch deren mechanische Kopplung über den Bodenkontakt der Antriebsräder $R_A$, $R_B$. Aus dieser Beziehung ist auch klar ersichtlich, dass diese Kopplung optimal ist für $\alpha = \beta = 0°$ und immer schwächer wird, je näher die Lenkwinkel $\alpha$, $\beta$ an $\pm 90°$ liegen. In der Extremlage $\alpha = \beta = \pm 90°$ ist diese mechanische Kopplung vollständig verschwunden und das Master/Slave-Antriebskonzept nicht mehr funktionsfähig. Die Konfiguration MASTER/SLAVE ist also für die Geradeausfahrt bei $\alpha = \beta = 0°$ optimiert und verliert mit wachsenden Lenkwinkeln $\alpha$, $\beta$ an Funktionstüchtigkeit. Ihre Anwendung erstreckt sich deshalb vorzugsweise auf den Winkelbereich von 0° bis zu einem, durch den Einsatz der Transporteinheit bestimmten Maximalwinkel, der z. B. $\pm 80°$ betragen kann. Ab diesen oberen Grenzwinkeln $\alpha_G$, $\beta_G$ werden die beiden Antriebsservos 6, 6′ nicht mehr als MASTER/SLAVE, sondern — wie später in Fig. 5 erläutert — vorzugsweise als MASTER/MASTER betrieben.

Ein Spezialfall ergibt sich für die Konfiguration MASTER/SLAVE beim Ausfahren aus einer Kurve, wenn — wie in Fig. 4a dargestellt — der Kurvenradius kleiner ist, als etwa der halbe Radstand der Transporteinheit 1. Da hier $\alpha << \beta$ ist, folgt $V_B >> V_A$. Unter diesen Bedingungen kann die durch $V_A$ vorgegebene Geschwindigkeit $V_B$ grösser sein als die zulässige Maximalgeschwindigkeit. Radantriebe, die in der Nähe ihres Wirkungsgrad-Optimums betrieben werden (wichtig wegen Batterie — Stromverbrauch) sind nun aber nicht in der Lage, ein Mehrfaches ihrer, in Fig. 4b mit $V_A'$ bezeichneten Normalgeschwindigkeit zu liefern. Es ist deshalb erforderlich, in Kurven die Geschwindigkeit des vorlaufenden Master-Antriebes so zu reduzieren, dass der nachlaufende Slave-Antrieb auch im Kurvenausgang in einem regulären Arbeitsbereich bleiben kann. Von Bedeutung ist auch, dass diese Verzögerung des Fahrzeuges mit mässigen Werten erfolgt, da sich die Verzögerungskräfte den Zentrifugalkräften überlagern und so zu unliebsamen Effekten, wie Lastverschiebung oder Spurverlust, führen können. Die Fahrzeugsteuerung muss also über Mittel verfügen, eine drohende Übergeschwindigkeit des Slave-Antriebes rechtzeitig vorauszusehen und den Master-Antrieb vorübergehend zu langsamerer Gangart zu veranlassen. Hiezu werden die Werte der Lenkwinkel $\alpha$ und $\beta$ mittels Lenkwinkelgebern 29, 29′ und Datenleitungen 12, 12′ dem vorlaufenden Fahrzellen-Mikrocomputer 22, 22′ zugeführt, der die Geschwindigkeitsvorgabe für den zugehörigen Antriebsservo 6, 6′ wie folgt reduziert und nachfolgend wieder erhöht: Nachdem die Transporteinheit 1 die Kurve etwa zur Hälfte durchfahren hat, reduziert sich der Master-Lenkwinkel $\alpha$ wieder. Unterschreitet er den Winkelwert R, wird die Antriebsgeschwindigkeit $V_A$ des Master-Antriebsservos 6 graduell so reduziert, dass $V_B$ im zulässigen Rahmen bleibt. Unterschreitet nun am Kurvenausgang auch der Slave-Lenkwinkel $\beta$ den Winkelwert E, so wird die Antriebsgeschwindigkeit $V_A$ des Master-Antriebsservo 6 wieder graduell auf den ursprünglichen Wert erhöht, sofern in diesem Zeitpunkt auch gilt:

$$\alpha \leqslant E \qquad\qquad\qquad\qquad (IV)$$

Mit der Bedingung IV werden Probleme beim Durchfahren zusammenhängender S-Kurven vermieden. Die beiden Winkelwerte R und E werden vorzugsweise durch Rechner-Simulation in Funktion von Kurvengeometrie, Radstand, zulässigen Beschleunigungs- und Verzögerungswerten sowie Geschwindigkeitsreserven der Antriebe errechnet und sind im allgemeinen innerhalb einer Transportanlage konstant.

Wie bereits erwähnt, ist die Konfiguration MASTER/SLAVE wegen abnehmender mechanischer Kopplung über die beiden Antriebsräder $R_A$, $R_B$ nur bis zu einem bestimmten Grenzwinkel $\alpha_G$, $\beta_G$ funktionsfähig. Ab diesen Winkeln werden die Antriebsservos 6, 6′ deshalb als Geschwindigkeitsregelkreise 14, 14′ betrieben und gemäss der in Fig. 5 dargestellten Konfiguration MASTER/MASTER zusammengeschaltet. Im Gegensatz zur Konfiguration MASTER/SLAVE basiert die Konfiguration MASTER/MASTER auf der Voraussetzung, dass die beiden Antriebsservos 6, 6′ über den Bodenkontakt der Antriebsräder $R_A$, $R_B$ nicht, bzw. möglichst wenig mechanisch gekoppelt sind. Die Konfiguration MASTER/MASTER ist deshalb für die Querfahrt bei $\alpha = \beta = \pm 90°$ optimiert und verliert mit kleiner werdenden Lenkwinkeln $\alpha$, $\beta$ an Funktionstüchtigkeit. Ihre Anwendung erstreckt sich vorzugsweise auf den Winkelbereich $\alpha_G$ $\beta_G < \alpha$, $\beta \leqslant \pm 90°$. Die beiden Konfigurationen MASTER/SLAVE und MASTER/MASTER ergänzen sich also hinsichtlich der Auslenkwinkel $\alpha$, $\beta$ vorzüglich, so dass mit dem erfindungsgemässen Antriebssystem der volle Schwenkbereich der Antriebsräder $R_A$, $R_B$ von — 90° bis + 90° lückenlos und optimal überdeckt werden kann.

Zur Illustration der mit der erfindungsgemässen Antriebs- und Lenksteuerung erzielbaren Beweglichkeit und Manövrierfähigkeit ist in Fig. 6 ein typischer Bewegungsablauf dargestellt : Unter Verwendung der bereits früher erwähnten sieben Fahrtypen 41, 42, 43, 44, 45, 46 und 47 und von 2 Leitlinien $L_A$, $L_B$, die auch identisch sein können, durchfährt die Transporteinheit 1 die Wegstrecke zwischen den Endpunkten A und B. Dabei wird jeder Fahrtyp in der für ihn bestgeeigneten Antriebskonfiguration gefahren : die Fahrtypen 41, 42, 43, 44 in der Konfiguration MASTER/SLAVE und die Fahrtypen 45, 46, 47 in der Konfiguration MASTER/MASTER. Es erfolgt also eine laufende Anpassung des Antriebes an den Bewegungsablauf, was eine Fahrt ergibt, die sich durch Spurtreue, minimalen Stromverbrauch und geringe mechanische Belastung der Transporteinheit auszeichnet.

**Patentansprüche**

1. Antriebs- und Lenksteuersystem für fahrerlose Transporteinheiten mit je zwei Antriebsrädern ($R_A$, $R_B$) sowie zusätzlich freilaufenden Stützrädern ($R_S$), wobei beide Antriebsräder ($R_A$) und ($R_B$) mit vertikalen Lenkachsen (7 bzw. 7') um die Lenkwinkel ($\alpha$ bzw. $\beta$) verschwenkbar sind und ein vorbestimmtes Antriebsrad ($R_A$) oder ($R_B$) hinsichtlich seiner Antriebsgeschwindigkeit ($V_A$ bzw. $V_B$) frei steuerbar ist, dadurch gekennzeichnet, dass zum Antrieb von mindestens zwei schwenkbaren Antriebsrädern ($R_A$, $R_B$) identische, je einen Elektromotor (13 bzw. 13'), einen Geschwindigkeitsregelkreis (14 bzw. 14'), einen Ankerstromregelkreis (15 bzw. 15') sowie eine Umschaltvorrichtung (16 bzw. 16') aufweisende Antriebsservos (6 bzw. 6') vorgesehen sind, welche mittels ihrer Umschaltvorrichtungen (16 bzw. 16') hinsichtlich Konfiguration und Betriebsart an die Lenkwinkel ($\alpha$, $\beta$) anpassbar sind, wobei in einer für die Lenkwinkel $\alpha$, $\beta = 0°$ optimierten Konfiguration MASTER/SLAVE der vorlaufende Master-Antriebsservo (6 oder 6') als motortreibender Geschwindigkeitsregelkreis (14 bzw. 14') betrieben ist, dessen Ankerstrom als Stromvorgabe auf mindestens einen nachlaufenden, als motortreibender Ankerstromregelkreis (15, 15') betriebenen Slave-Antriebsservo (6, 6') gekoppelt ist, und dessen Geschwindigkeitsvorgabe von den Lenkwinkeln ($\alpha$, $\beta$) so gesteuert ist, dass die Antriebsgeschwindigkeit ($V_A$, $V_B$) mindestens eines nachlaufenden Slave-Antriebsservos (6, 6') $\leq V_{max}$ ist, während in einer für die Lenkwinkel $\alpha$, $\beta = \pm 90°$ optimierten Konfiguration MASTER/MASTER beide Antriebsservos (6, 6') als voneinander unabhängige motortreibende Geschwindigkeitsregelkreise (14, 14') betrieben sind.

2. Antriebs- und Lenksteuersystem nach Anspruch 1, dadurch gekennzeichnet, dass die Geschwindigkeitsregelkreise (14, 14') je einen Pulsraten-Digitalwandler (21, 21') enthalten und über Geschwindigkeitsregler (18, 18') geschlossen sind, welche ihre Geschwindigkeitsvorgabe in paralleler oder serieller Form über Datenleitungen (36, 36') von den zugehörigen Fahrzellen-Mikrocomputern (22, 22') erhalten.

3. Antriebs- und Lenksteuersystem nach Anspruch 1, dadurch gekennzeichnet, dass die Ankerstromregelkreise (15, 15') je eine Ankerstromaufbereitungsschaltung (24, 24') enthalten und über Stromregler (19, 19') geschlossen sind, welche ihre Stromvorgabe in serieller Form über Datenleitungen (17, 17') vom zugeordneten Masterservo (6, 6') erhalten.

4. Antriebs- und Lenksteuersystem nach Anspruch 1, dadurch gekennzeichnet, dass in jedem Antriebsservo (6, 6') der Geschwindigkeitsregelkreis (14 bzw. 14') und der Ankerstromregelkreis (15 bzw. 15') einen Pulsbreitenmodulator (25 bzw. 25') und einen getasteten Leistungsverstärker (26 bzw. 26') gemeinsam haben.

5. Antriebs- und Lenksteuersystem nach Anspruch 1, dadurch gekennzeichnet, dass der Elektromotor (13, 13') ein permanentmagneterregter DC-Motor ist.

6. Antriebs- und Lenksteuersystem nach Anspruch 1, dadurch gekennzeichnet, dass die Geschwindigkeitsregler (18, 18') zeit- und amplitudenquantisierte Regler mit konstanten Koeffizienten sind.

7. Antriebs- und Lenksteuersystem nach Anspruch 1, dadurch gekennzeichnet, dass die Umschaltvorrichtungen (16, 16') für die Betriebsarten und Konfigurationen je zwei Stellungen MASTER und SLAVE aufweisen und als mechanische Schalter oder als elektronische oder software Umschaltvorrichtungen ausgebildet sind.

8. Antriebs- und Lenksteuersystem nach Anspruch 1, dadurch gekennzeiohnet, dass in der Konfiguration MASTER/SLAVE zur Begrenzung der Antriebsgeschwindigkeit ($V_A$ oder $V_B$) mindestens eines nachlaufenden Slave-Antriebsservos (6 bzw. 6') die Auslenkwinkel ($\alpha$, $\beta$) über Winkelgeber (29, 29') und Datenleitungen (12, 12') auf den vorlaufenden Fahrzellen-Mikrocomputer (22, 22') geführt sind, der die Geschwindigkeitsvorgabe für den vorlaufenden Antriebsservo (6, 6') graduell reduziert, wenn der zugehörige Lenkwinkel ($\alpha$, $\beta$) den Winkelwert R unterschritten hat sowie graduell erhöht, wenn der nichtzugehörige Lenkwinkel ($\alpha$, $\beta$) den Winkelwert E unterschritten hat und grösser als der zugehörige Lenkwinkel ($\alpha$, $\beta$) ist.

9. Antriebs- und Lenksteuersystem nach Anspruch 1 und 8, dadurch gekennzeichnet, dass die Winkelwerte R und E durch Rechnersimulation in Funktion von Kurvengeometrie, Radstand, zulässiger Verzögerung und Beschleunigung sowie Geschwindigkeitsreserven der Antriebsservos (6, 6') für jede Transportanlage individuell bestimmt sind.

10. Antriebs- und Lenksteuersystem nach Anspruch 1, dadurch gekennzeichnet, dass in den Konfigurationen MASTER/SLAVE und MASTER/MASTER die Antriebsgeschwindigkeiten $V_A$, $V_B$ auf die dem Wirkungsgrad-Optimum entsprechende Maximalgeschwindigkeit $V_{max}$ abgestimmt sind, wobei

stets mindestens eine Antriebsgeschwindigkeit $V_A$ oder $V_B = V_{max}$ ist, und stets beide $V_A$ und $V_B \leqslant V_{max}$ sind.

11. Antriebs- und Lenksteuersystem nach Anspruch 1, dadurch gekennzeichnet, dass für die Lenkwinkel $\alpha$, $\beta = 0°$ die Konfiguration MASTER/SLAVE zur Anwendung gelangt.

12. Antriebs- und Lenksteuersystem nach Anspruch 1, dadurch gekennzeichnet, dass für die Lenkwinkel $\alpha$, $\beta = \geqslant\pm90°$ die Konfiguration MASTER/MASTER zur Anwendung gelangt.

13. Antriebs- und Lenksteuersystem nach Anspruch 1, dadurch gekennzeichnet, dass für Lenkwinkel in den Bereichen - 90° < $\alpha$, $\beta$ < 0° sowie 0° < $\alpha$, $\beta$ < + 90° je nach Betriebsbedingungen und Fahrtdauer wahlweise die Konfigurationen MASTER/ SLAVE oder MASTER/MASTER zur Anwendung gelangen.

## Claims

1. A control system for driving and steering driverless transport units each comprising two driving wheels ($R_A$, $R_B$) and additional free-wheeling support wheels ($R_S$), wherein both driving wheels ($R_A$ and $R_B$) are pivotable about vertical steering axles (7 and 7', respectively) by the steering angles ($\alpha$ and $\beta$, respectively) and a predetermined driving wheel ($R_A$) or ($R_B$) is freely controllable with respect to its drive speed ($V_A$ or $V_B$, respectively), characterized in that for driving at least two pivotable driving wheels ($R_A$, $R_B$) identical servo-drive units (6 and 6', respectively) are provided for, each servo-drive unit comprising an electromotor (13 and 13', respectively), a speed regulation loop (14 and 14', respectively), an armature current regulation loop (15 and 15', respectively) and a switch device (16 and 16', respectively), each of said servo-drive units being adaptable in configuration and operation mode to said steering angles ($\alpha$, $\beta$) by means of its switch device (16, 16'), whereby in a configuration MASTER/SLAVE optimized for steering angles $\alpha$, $\beta = 0°$ the leading master servo-drive unit (6 or 6') is operated as motor-driving speed regulation loop (14 or 14', respectively), the armature current thereof is coupled as a reference current to at least one trailing slave servo-drive unit (6, 6') operated as motor driving armature current regulation loop (15, 15'), which speed reference is controlled by said steering angles ($\alpha$, $\beta$) in a manner that the driving speed ($V_A$, $V_B$) of at least one trailing slave servodrive unit (6, 6') is $\leqslant V_{max}$, and whereby in a configuration MASTER/MASTER optimized for steering angles $\alpha$, $\beta = \pm 90°$ both servo-drive units (6, 6') are operated as motor-driving speed regulation loops (14, 14') independently from each other.

2. A control system according to claim 1, characterized in that said speed regulation loops (14, 14') comprise each a pulse rate digital converter (21, 21') and are closed by means of speed regulators (18, 18') which receive their speed reference in parallel or serial form via data lines (36, 36') from associated drive module microcomputers (22, 22').

3. A control system according to claim 1, characterized in that said armature current regulation loops (15, 15') each comprise an armature current processing circuit (24, 24') and are closed by current regulators (19, 19') which receive their current reference in serial form via data lines (17, 17') from the associated master servo-drive unit (6, 6').

4. A control system according to claim 1, characterized in that in each servo-drive unit (6, 6') said current regulation loop (14, 14') and said armature regulation loop (15, 15') have a common pulse width modulator (25 and 25', respectively) and a common switching power amplifier (26 and 26', respectively).

5. A control system according to claim 1, characterized in that said electromotor (13, 13') is a permanent magnet-excited DC-motor.

6. A control system according to claim 1, characterized in that said speed regulation loops (18, 18') are regulators quantized with respect to time and amplitude and with constant coefficients.

7. A control system according to claim 1, characterized in that said switch devices (16, 16') for said modes of operation and configuration have each two positions MASTER and SLAVE and are constituted as mechanical switches or as electronic switches or as software switches.

8. A control system according to claim 1, characterized in that in order to limit the drive speed ($V_A$ or $V_B$, respectively) of at least one trailing servo-drive unit (6, 6') in said configuration MASTER/SLAVE said steering angles ($\alpha$, $\beta$) are input via angle transducers (29, 29') and data lines (12, 12') to the leading drive module microcomputer (22, 22'), which gradually reduces the speed reference to the leading servo-drive unit (6, 6') when the associated steering angle ($\alpha$, $\beta$) falls below an angle value R and gradually increases said speed reference when the non-associated steering angle ($\alpha$, $\beta$) falls below an angle value E and is greater than said associated steering angle ($\alpha$, $\beta$).

9. A control system according to claims 1 and 8, characterized in that said angle values R and E are individually determined for each transport unit by means of computer simulation as a function of curve geometry, wheel base length, allowable deceleration and acceleration as well as speed reserves of said servo-drive units (6, 6').

10. A control system according to claim 1, characterized in that in said configurations MASTER/ SLAVE and MASTER/MASTER said drive speeds $V_A$, $V_B$ are adapted to the maximum drive speed corresponding to optimum efficiency, whereby continuously at least one drive speed $V_A$ or $V_B = V_{max}$ and continuously both $V_A$ and $V_B \leqslant V_{max}$.

11. A control system according to claim 1, characterized in that said configuration MASTER/SLAVE is used for steering angles $\alpha$, $\beta = 0°$.

EP 0 174 436 B1

12. A control system according to claim 1, characterized in that said configuration MASTER/MASTER is used for steering angles $\alpha$, $\beta = \pm 90°$.

13. A control system according to claim 1, characterized in that for steering angles in the ranges of $-90°C < \alpha$, $\beta < 0°$ and $0° < \alpha$, $\beta < +90°$ selectively said configurations MASTER/SLAVE or MASTER/MASTER are assumed depending on the operating conditions and the travel duration.

## Revendications

1. Système de commande pour la propulsion et la direction d'unités de transport sans conducteur, possédant chacune deux roues motrices ($R_A$, $R_B$), et en plus des roues d'appui ($R_S$) tournant librement, les deux roues motrices ($R_A$ et $R_B$) présentant chacune un axe de pivotement vertical (7 ou 7') autour duquel elles sont orientables d'un angle de braquage ($\alpha$ ou $\beta$), une roue motrice prédéterminée ($R_A$ ou $R_B$) pouvant être commandée librement en ce qui concerne sa vitesse d'entraînement ($V_A$ ou $V_B$), caractérisé en ce qu'il comprend, pour l'entraînement d'au moins deux roues motrices orientables ($R_A$, $R_B$), des servocommandes de propulsion (6 ou 6') identiques, présentant chacune un moteur électrique (13 ou 13'), un circuit de réglage de la vitesse (14, 14'), un circuit de réglage du courant d'induit (15 ou 15'), ainsi qu'un dispositif de commutation (16 ou 16'), servocommandes qui, au moyen de leurs dispositifs de commutation (16 ou 16'), sont adaptables aux angles de braquage ($\alpha$, $\beta$) en ce qui concerne la configuration et le mode de fonctionnement, l'agencement étant tel que, dans une configuration MAITRE/ESCLAVE optimisée pour les angles de braquage $\alpha$, $\beta = 0°$, la servocommande de propulsion maître (6 ou 6'), à l'avant, est utilisée en tant que circuit de réglage de la vitesse (14 ou 14') pour la commande du moteur, dont le courant d'induit est transmis en tant que courant de référence à au moins une servocommande de propulsion esclave (6, 6'), à l'arrière, utilisée en tant que circuit de réglage du courant d'induit (15, 15') pour la commande du moteur et dont la vitesse de référence est commandée par les angles de braquage ($\alpha$, $\beta$) de manière que la vitesse d'entraînement ($V_A$, $V_B$) d'au moins une servocommande de propulsion esclave (6, 6'), à l'arrière, soit égale ou inférieure à $V_{max}$, tandis que, dans une configuration MAITRE/MAITRE optimisée pour les angles de braquage $\alpha$, $\beta = \pm 90°$, les deux servocommandes de propulsion (6, 6') sont utilisées en tant que circuits de réglage de la vitesse (14, 14'), pour la commande du moteur, qui sont indépendants l'un de l'autre.

2. Système selon la revendication 1, caractérisé en ce que les circuits de réglage de la vitesse (14, 14') comportent chacun un convertisseur numérique de taux d'impulsions (21, 21') et sont fermés par des régulateurs de vitesse (18, 18') qui reçoivent leur vitesse de référence, sous forme parallèle ou sérielle, à travers des lignes de données (36, 36') des microordinateurs (22, 22') correspondants de la cellule mobile.

3. Système selon la revendication 1, caractérisé en ce que les circuits de réglage du courant d'induit (15, 15') comportent chacun un circuit de préparation du courant d'induit (24, 24') et sont fermés par des régulateurs de courant (19, 19') qui reçoivent leur courant de référence sous forme sérielle par des lignes de données (17, 17') de la servocommande maître (6, 6') coordonnée.

4. Système selon la revendication 1, caractérisé en ce que, dans chaque servocommande de propulsion (6, 6'), le circuit de réglage de la vitesse (14 ou 14') et le circuit de réglage du courant d'induit (15 ou 15') possèdent un modulateur d'impulsions en durée (25 ou 25') et un amplificateur de puissance à impulsions (26 ou 26') en commun.

5. Système selon la revendication 1, caractérisé en ce que le moteur électrique (13, 13') est un moteur à courant continu à excitation par aimants permanents.

6. Système selon la revendication 1, caractérisé en ce que les régulateurs de vitesse (18, 18') sont des régulateurs à quantification de temps et d'amplitude avec des coefficients constants.

7. Système selon la revendication 1, caractérisé en ce que les dispositifs de commutation (16, 16') pour les modes de fonctionnement et les configurations présentent chacun deux positions MAITRE et ESCLAVE et sont réalisés sous forme d'interrupteurs mécaniques ou sous forme de dispositifs de commutation électroniques ou constitués par le logiciel.

8. Système selon la revendication 1, caractérisé en ce que, dans la configuration MAITRE/ESCLAVE, pour limiter la vitesse d'entraînement ($V_A$ ou $V_B$) d'au moins une servocommande de propulsion esclave (6 ou 6'), à l'arrière, les angles de braquage ($\alpha$, $\beta$) sont appliqués au moyen de capteurs d'angle (29, 29') et de lignes de données (12, 12') au microordinateur (22, 22') de la cellule mobile à l'avant, lequel réduit la vitesse de référence pour la servocommande de propulsion à l'avant (6, 6') graduellement lorsque l'angle de braquage ($\alpha$, $\beta$) correspondant est descendu au-dessous d'une valeur d'angle (R), et qui augmente cette vitesse de référence graduellement lorsque l'angle de braquage ($\alpha$, $\beta$) non correspondant est descendu au-dessous d'une valeur d'angle E et est plus grand que l'angle de braquage ($\alpha$, $\beta$) correspondant.

9. Système selon les revendications 1 et 8, caractérisé en ce que les valeurs d'angle R et E sont déterminées individuellement, pour chaque installation de transport, par simulation par un calculateur, en fonction de la géométrie de virages, de la position des roues, de la décélération et de l'accélération admissibles, ainsi que des réserves de vitesse des servocommandes de propulsion (6, 6').

10. Système selon la revendication 1, caractérisé en ce que, dans les configurations MAITRE/ESCLAVE et MAITRE/MAITRE, les vitesses d'entraînement $V_A$, $V_B$ sont accordées à la vitesse

maximale $V_{max}$ correspondant au rendement optimal, au moins une vitesse d'entraînement $V_A$ ou $V_B = V_{max}$ à tout moment et les deux vitesses $V_A$ et $V_B \leq V_{max}$ à tout moment.

11. Système selon la revendication 1, caractérisé par l'application de la configuration MAITRE/ESCLAVE pour les angles de braquage $\alpha$, $\beta = 0°$.

12. Système selon la revendication 1, caractérisé par l'application de la configuration MAITRE/MAITRE pour les angles de braquage $\alpha$, $\beta = \pm 90°$.

13. Système selon la revendication 1, caractérisé par l'application, au choix, des configurations MAITRE/ESCLAVE ou MAITRE/MAITRE pour des angles de braquage compris dans les domaines $-90° < \alpha$, $\beta < 0°$ ainsi que $0° < \alpha$, $\beta < + 90°$, suivant les conditions d'exploitation et la durée du déplacement.

# Fig.1

# Fig.2

# Fig.3

EP 0 174 436 B1

EP 0 174 436 B1

# Fig.4a

# Fig.4b

4

**Fig.5**

3

# Fig. 6

43 ($\alpha = -\beta \neq 0$)

$L_A$

$L_B$

44
($0° < \alpha \neq \beta \leq$ ca. 80°)

42
($0° < \alpha = \beta \leq$ ca. 80°)

$L_A$

$L_B$

$L_A$

$L_B$

45
(ca. 80° < $\alpha + \beta <$ 90°)

46
($\alpha = \beta = \pm 90°$)

41
$\alpha = \beta = 0°$

A

B

B

47 ($\alpha = \beta = +90°$)

47 ($\alpha = \beta = -90°$)

5